# DEMANDE DE BREVET EUROPEEN

(11) **EP 4 726 593 A1**
(43) Date de publication de la demande: **15.04.2026**
(21) Numéro de dépôt: 25207968.6
(22) Date de dépôt: 10.10.2025
(51) Int. Cl.: G06F 30/13, G06F 30/20, G06T 19/00, H02S 10/00, G06F 3/01, G06T 19/20, G06F 111/10, G06F 111/18

(54) **PROCEDE MIS EN UVRE PAR ORDINATEUR ADAPTE POUR AMELIORER LA CONCEPTION D'UNE CENTRALE PHOTOVOLTAIQUE ET UN SYSTEME POUR LEDIT PROCEDE REPRESENTE PAR REALITE AUGMENTEE**

(30) Priorité: 11.10.2024 FR 2411034
(71) Demandeur: TSE, 06560 Valbonne Sophia Antipolis (FR)
(72) Inventeur: BURTIN, Denis, 38210 VOUREY (FR); OSMANI, Quentin, 38090 VAULX MILIEU (FR)
(74) Mandataire: Murgitroyd & Company

(57) **Abrégé**

La présente invention concerne un procédé mis en œuvre par ordinateur permettant d'optimiser la conception d'une centrale photovoltaïque comprenant une structure positionnée sur un support, une pluralité d'unités de production d'électricité connectées à ladite structure, chacune des unités de production d'électricité étant conçue pour modifier leur orientation par rapport au soleil afin d'optimiser leur production d'électricité à tout moment, lesdites unités de production d'électricité étant connectées à des moyens de commande permettant de contrôler ladite orientation.

## Description

### Domaine de l'invention

La présente invention concerne un procédé de mise en œuvre par ordinateur, adapté pour améliorer la conception et / ou l'utilisation d'une centrale photovoltaïque.

Lors de la conception d'une centrale photovoltaïque, un certain nombre de caractéristiques concernant ladite centrale photovoltaïque est déterminé. Lesdites caractéristiques comprennent, entre autres, la quantité d'énergie électrique que la centrale photovoltaïque est destinée à produire ainsi que ses dimensions extérieures.

Sur la base de la taille prévue de la centrale photovoltaïque, de la production d'électricité prévue et des limites imposées par le site où la centrale photovoltaïque doit être installée, l'utilisateur conçoit ladite centrale photovoltaïque de manière à ce qu'elle réponde, autant que possible, aux caractéristiques initialement définies.

### Etat de la technique

Dans l'art antérieur, il est connu de concevoir des centrales photovoltaïques au moyen d'un dispositif électronique comprenant, entre autres, des outils de dessin. Au cours du processus de conception, les paramètres imposés pour la centrale photovoltaïque, tels que la production totale d'électricité, l'emplacement spécifique où la centrale doit être érigée et les détails de construction de la centrale, sont combinés pour obtenir une conception finale de la centrale photovoltaïque.

Lors de la conception d'une centrale photovoltaïque, il est courant que des éléments de construction standard soient utilisés comme modules et que la conception finale soit essentiellement une combinaison sélectionnée d'un certain nombre de ces modules standards.

Les détails de construction de la centrale photovoltaïque dépendent fortement du type de centrale photovoltaïque concerné. Les données relatives au type et à la forme du terrain disponible pour la construction de la centrale sont normalement fournies par un expert, tel qu'un géomètre.

Selon l'état de la technique, la phase de conception d'une centrale photovoltaïque est généralement réalisée dans un studio de conception, par exemple dans un bureau d'études spécialisé.

Une fois la conception achevée et acceptée par les parties concernées, la construction proprement dite commence. Selon l'état de la technique, la construction effective de la centrale photovoltaïques est la première occasion de tester l'adaptabilité réelle de la conception de la centrale photovoltaïque à l'endroit spécifique où elle est construite.

Pendant la construction de la centrale photovoltaïque, il est possible que certains éléments de la construction doivent être modifiés pour adapter la construction à la présence d'obstacles sur le site de construction, tels que la présence de rochers ou d'autres obstacles dans le sol. Un tel obstacle peut aussi comprendre un élément positionné sur le sol, tel qu'une clôture ou un portail ou d'autres éléments tels que des chemins existants ou de la végétation.

De plus, il est possible que des obstacles soient formés par des éléments techniques, tel qu'un drain, un conduit ou un puits.

Il est également possible qu'une fois la centrale photovoltaïque construite, il s'avère que si les caractéristiques spécifiques de l'environnement dans lequel la centrale est placée avaient été prises en compte, la construction de la centrale photovoltaïque aurait pu être améliorée pour garantir une meilleure intégration de la construction dans le paysage.

L'adaptation éventuelle de la conception finale peut être liée à des considérations purement techniques. Par exemple, la présence d'un rocher, d'un tracteur, d'animaux ou d'une clôture, dans le cadre d'une activité agricole, peut gêner la fixation d'un poteau à l'endroit choisi. Dans ce cas, il s'avère que la conception initiale de la centrale photovoltaïque ne prend pas suffisamment en compte l'activité agricole présente sur le terrain.

L'adaptation éventuelle peut également porter sur des considérations esthétiques. Par exemple, la forme et la hauteur d'un panneau photovoltaïque peuvent créer des obstacles susceptibles de porter atteinte à l'esthétisme d'un lieu particulier et/ou à la vue d'un lieu particulier.

Pour ces raisons, il apparaît nécessaire de disposer d'un outil amélioré qui permette d'examiner l'adaptabilité d'un projet de centrale photovoltaïque à l'emplacement choisi.

Une autre considération est le fait que l'intention de construire une centrale photovoltaïque peut susciter des réserves, par exemple de la part des résidents qui craignent l'arrivée d'un dispositif non adapté dans leur quartier. Un outil qui permettrait de visualiser le dispositif finalisé avant sa construction pourrait lever les réticences des parties prenantes.

Compte tenu des considérations susmentionnées, il apparaît nécessaire de trouver une solution permettant d'examiner en détail l'adaptabilité de la conception d'une centrale photovoltaïques à l'emplacement déterminé où la centrale doit être construite, avant le début effectif de la construction de la centrale photovoltaïque.

Au vu des observations ci-dessus, la présente invention a pour objectif d'améliorer la conception de la centrale photovoltaïque, et ce avant sa construction, et son utilisation en tenant compte à la fois de l'objectif initial, à savoir la production d'électricité, et d'une utilisation secondaire, par exemple la culture de végétaux.

### Objet de l'invention

Compte tenu des observations ci-dessus, l'objet de la présente invention concerne un procédé mis en œuvre par ordinateur.

Selon un premier aspect, l'invention concerne un procédé mis en œuvre par ordinateur permettant d'optimiser la conception d'une centrale photovoltaïque et comprenant une structure positionnée sur un support, une pluralité d'unités de production d'électricité connectées à ladite structure. Ce procédé comprend les étapes suivantes :
- obtenir dans un ordinateur un modèle mathématique d'une première conception de la centrale photovoltaïque comprenant les positions des différentes unités de production d'électricité par rapport au support dans une première orientation, les distances mutuelles entre lesdites unités de production et la position du soleil par rapport à ladite centrale photovoltaïque,
- générer, au moyen de l'ordinateur, une première image représentant la première conception de la centrale photovoltaïque,
- obtenir au moyen d'une caméra connectée à l'ordinateur, une deuxième image représentant la zone prévue pour la construction de la centrale photovoltaïque selon la première conception,
- représenter la première image et la deuxième image sur un écran relié à l'ordinateur afin d'obtenir une image combinée montrant la centrale photovoltaïque selon la première conception sur ladite zone prévue, et
- analyser l'adéquation de la première conception de la centrale photovoltaïque à la zone prévue.

Selon un mode de réalisation de l'invention, le procédé comprend les étapes suivantes :
- identifier, sur la base de l'analyse de l'adéquation de la première conception de la centrale photovoltaïque à la zone prévue, des modifications permettant d'améliorer l'adéquation de la centrale photovoltaïque à la zone prévue,
- mettre à jour la première conception de la centrale photovoltaïque à l'aide desdites modifications identifiées afin d'obtenir une deuxième conception de la centrale photovoltaïque,
- générer, au moyen de l'ordinateur, une première image actualisée représentant la deuxième conception de la centrale photovoltaïque, et
- projeter la première image actualisée et la deuxième image sur l'écran relié à l'ordinateur afin d'obtenir une image combinée actualisée montrant la centrale photovoltaïque selon la deuxième conception sur la zone prévue.

Selon un mode de réalisation de l'invention, le procédé comprend les étapes suivantes :
- obtenir dans l'ordinateur un modèle mathématique de la centrale photovoltaïque comprenant les positions des différentes unités de production d'électricité par rapport au support dans une deuxième orientation,
- générer au moyen du calculateur une première image actualisée représentant la centrale photovoltaïque avec les différentes unités de production d'électricité dans une seconde orientation, et
- représenter la première image actualisée et la deuxième image sur l'écran relié à l'ordinateur afin d'obtenir une image combinée actualisée représentant la centrale photovoltaïque avec les différentes unités de production d'électricité dans la deuxième orientation sur ladite zone prévue.

Selon un mode de réalisation de l'invention, la première image est une image en 3D et la deuxième image est une image vidéo.

Selon un mode de réalisation de l'invention, la deuxième image est une image en temps réel.

Selon un mode de réalisation de l'invention, le procédé comprend les étapes suivantes :
- calculer, pour un moment déterminé, au moyen du modèle mathématique et de la position du soleil audit moment déterminé, la taille et la position des ombres sur le sol, en tenant compte de l'orientation instantanée de chacune des unités de production d'électricité, et
- représenter les ombres calculées dans l'image combinée afin d'obtenir une image combinée montrant la centrale photovoltaïque sur la zone prévue et la présence d'ombres sur la zone prévue audit moment déterminé.

Selon un mode de réalisation de l'invention, dans l'image combinée, à l'aide de couleurs, différentes zones sont représentées, les différentes couleurs représentant différentes intensités d'exposition au soleil.

Selon un mode de réalisation de l'invention, chacune des unités de production d'électricité est conçue pour modifier son orientation par rapport au soleil afin d'optimiser sa production d'électricité lesdites unités de production d'électricité étant connectées à des moyens de commande permettant de contrôler l'orientation, et le procédé comprend les étapes suivantes :
- calculer, pour un montant déterminé, au moyen du modèle mathématique et de la position du soleil audit moment déterminé, la production d'électricité de la centrale photovoltaïque pour une pluralité d'orientations pour chacune de ladite pluralité d'unités de production d'électricité, en tenant compte de l'orientation instantanée de chacune des unités de production d'électricité et de leur production d'électricité instantanée correspondante
- sélectionner, parmi cette pluralité d'orientations, une orientation déterminée pour chacune des unités de production d'électricité qui correspond à un ensemble de positions optimales pour la production d'électricité au moyen de la centrale photovoltaïque à l'instant déterminé,
- générer, au moyen de l'ordinateur une première image actualisée représentant la centrale photovoltaïque avec les différentes unités de production d'électricité dans leur position optimale respective, et
- représenter la première image actualisée et la deuxième image sur l'écran relié à l'ordinateur afin d'obtenir une image combinée actualisée montrant la centrale photovoltaïque avec les différentes unités de production d'électricité dans leur position optimale sur ladite zone prévue au moment déterminé.

Selon un mode de réalisation de l'invention, le modèle mathématique comprend des paramètres définissant des éléments structurels de la centrale photovoltaïque et/ou des paramètres définissant des objets à proximité de la centrale photovoltaïque et le procédé comprend notamment l'étape suivante :
- identifier à l'aide du modèle mathématique, la présence d'au moins une ombre créée par un élément structurel de la centrale photovoltaïque et/ou un objet à proximité de la centrale photovoltaïque sur une unité de production d'électricité à l'instant déterminé, afin d'identifier une unité de production d'électricité ombragée.

Selon un mode de réalisation de l'invention, le modèle mathématique comprend des paramètres définissant l'irrigation avec des moyens d'irrigation autour de la centrale photovoltaïque où dans l'image combinée, à l'aide de couleurs, différentes zones sont représentées, les différentes couleurs représentant différentes intensités d'irrigation autour de la centrale photovoltaïque.

Selon un mode de réalisation de l'invention, le modèle mathématique comprend des paramètres définissant des représentations des machines agricoles, où dans l'image combinée, à l'aide desdits paramètres, la présence des machines agricoles est représentée.

Selon un deuxième aspect, l'invention concerne un produit programme d'ordinateur comprenant des instructions qui, lorsque le programme est exécuté par un ordinateur, conduisent celui-ci à mettre en œuvre le procédé selon la présente invention.

Selon un troisième aspect, l'invention concerne un support d'enregistrement comprenant des instructions qui, lorsqu'elles sont exécutées par un ordinateur, conduisent celui-ci à mettre en œuvre le procédé selon la présente invention.

### Brève description des dessins

Les but, objet et caractéristiques de l'invention apparaîtront plus clairement à la lecture de la description qui suit faite en référence aux figures dans lesquelles :
[Fig. 1] montre, de façon schématique, un mode de réalisation d'une partie d'une centrale photovoltaïque de type orientable autour d'un simple axe,
[Fig. 2] représente une vue schématique d'un système informatique adapté pour la présente invention,
[Fig. 3] montre, de façon schématique, une image combinée pouvant être obtenue au moyen de la présente invention,
[Fig. 4] représente une image combinée de la centrale photovoltaïque pourvue de tables et de panneaux photovoltaïques dans une première orientation par rapport au sol,
[Fig. 5] montre une image combinée de la centrale photovoltaïque pourvue de tables et de panneaux photovoltaïques dans une deuxième orientation par rapport au sol, et
[Fig. 6] représente, de façon schématique, la présence d'une machine agricole située à proximité de la construction de la centrale photovoltaïque.

Au début de la description d'un exemple de la méthode et du système selon l'invention, il est souligné que la solution selon l'invention peut être utilisée pour la conception de n'importe quel type de centrale solaire. Cela comprend, entre autres, les centrales solaires dans lesquelles les panneaux solaires sont fixés à des constructions proches du sol et les centrales photovoltaïques posées au sol.

Il convient de comprendre que la solution selon la présente invention n'est en aucun cas limitée à ce type de centrale photovoltaïque.

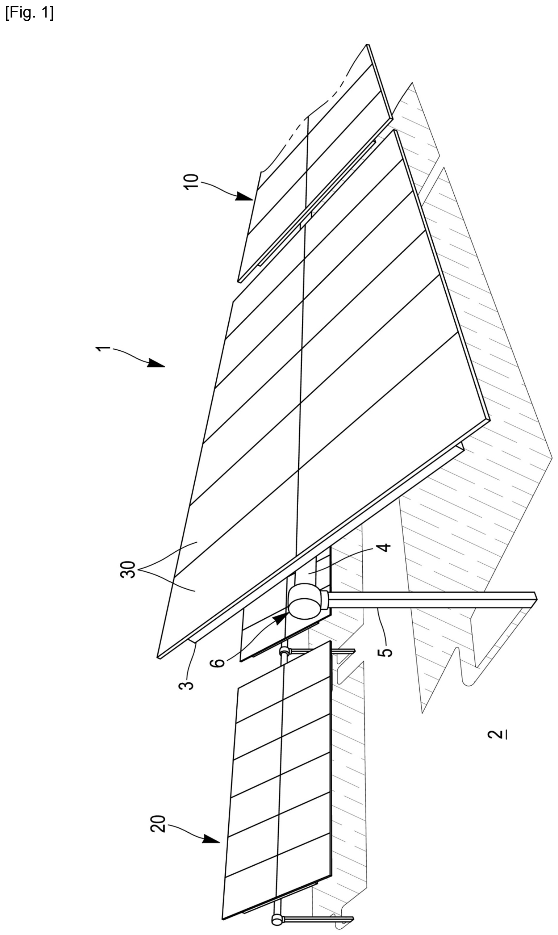

La figure 1 montre, de façon schématique, un mode de réalisation d'une partie d'une centrale photovoltaïque 1. La centrale photovoltaïque 1 permet de fixer des panneaux photovoltaïques 30 sur des tables 3 au-dessus du sol 2. Ledit système 1 est positionné sur le sol 2, ledit sol 2 formant le support pour ladite centrale photovoltaïque 1.

Les tables 3, selon la figure 1, sont fixées sur des éléments de support 4 qui ont essentiellement la forme de tubes.

Les éléments de support sont fixés sur des poteaux 5, à l'aide d'un système de tracking 6. Le système de tracking 6 permet de modifier l'inclinaison des panneaux photovoltaïques 30 par rapport à la verticale. Cela permet de modifier l'orientation desdits panneaux photovoltaïques 30 par rapport au soleil durant la journée et durant l'année. Ainsi, le système de tracking permet d'optimiser la production d'électricité à l'aide des panneaux photovoltaïques 30.

La figure 1 montre une partie d'une première rangée 10 et une deuxième rangée 20 de panneaux photovoltaïques 30. Il faut comprendre, que dans la réalité une quantité importante de rangées peut être choisie pour former une centrale photovoltaïque 1 complète.

Un avantage important du type de centrale photovoltaïque 1 selon la figure 1, est le fait qu'un utilisateur est libre de choisir la quantité de rangées 10, 20 la longueur de chaque rangées 10, 20 et la distance entre des rangées consécutives.

La distance entre des rangées consécutives peut-être choisie pour permettre à l'utilisateur d'utiliser le sol entre les différentes rangées 10, 20 et/ou sous les panneaux photovoltaïques 30 à d'autres fins que celle de produire de l'électricité. Typiquement, il est connu d'utiliser le sol situé autour d'une centrale photovoltaïque 1 à des fins agricoles.

Selon un premier exemple, le sol situé entre et/ou sous les panneaux photovoltaïques 30 peut être utilisé pour faire pousser des végétaux. L'utilisation du sol, situé entre et/ou sous les panneaux photovoltaïques 30, pour la pousse des végétaux permet à l'utilisateur de générer des revenus complémentaires. Le flux initial de revenus pour l'utilisateur est lié à la production d'électricité, le second flux de revenus est lié à la seconde utilisation du sol situé sous les panneaux photovoltaïques.

Il est également à rappeler que dans le cas de l'utilisation d'une centrale photovoltaïque 1 selon l'exemple de la figure 1, les tables 3 sur lesquelles sont fixés les panneaux photovoltaïques 30 sont elles-mêmes fixées aux éléments de support 4 de manière à pouvoir modifier leur l'inclinaison par rapport à la verticale. Le fait de modifier l'inclinaison des tables 3 permet d'améliorer l'orientation des panneaux photovoltaïques 30 fixés sur celles-ci par rapport au soleil.

En pratique, il a été confirmé que la présence des panneaux photovoltaïques 30 au-dessus du sol peut avoir des effets bénéfiques sur la production des plantes situées auprès desdits panneaux photovoltaïques.

Par exemple, une orientation optimale des tables 3 sur lesquelles sont fixés les panneaux photovoltaïques 30 garantit aux plantes situées sous les panneaux photovoltaïques 30 une quantité appropriée de lumière solaire tout au long de la journée.

En cas de précipitations, l'inclinaison des tables peut influencer la quantité d'eau qui s'écoule sur les plantes. Les panneaux photovoltaïques 30, placés en position horizontale, peuvent également être utilisés pour protéger les plantes contre, par exemple, l'exposition directe à la grêle.

Pour optimiser le revenu total d'un utilisateur, il convient d'optimiser à la fois la production d'électricité au moyen des panneaux photovoltaïques 30 et l'utilisation du sol autour des panneaux photovoltaïques, par exemple à des fins agricoles.

En pratique, il peut être difficile d'optimiser l'utilisation d'une centrale photovoltaïque 1 du type présenté dans la figure 1, dès lors que celle-ci a déjà été construite. En pratique, il est connu de concevoir et de construire ladite centrale photovoltaïque 1 de manière à optimiser la production d'électricité. Lorsque la construction sera finalisée, l'utilisation secondaire du sol sous la centrale photovoltaïque 1 sera optimisée autant que possible. En d'autres termes, l'utilisation secondaire du sol sous la centrale photovoltaïque sera optimisée en tenant compte, d'une part, des inconvénients imposés par la forme des différents éléments de construction de ladite centrale photovoltaïque 1 et, d'autre part, des caractéristiques du site réel sur lequel la centrale photovoltaïque 1 a été construite.

Comme illustré sur la figure 1, la centrale photovoltaïque 1 permet de disposer ladite pluralité de tables 3, chacune d'entre elles étant pourvue de panneaux photovoltaïques 20, au-dessus du sol 2, selon une inclinaison déterminée par rapport audit sol 2.

Selon l'exemple illustré sur la figure 1, les rangées 10, 20 sont espacées selon une telle distance, permettent, par exemple, une libre circulation des agriculteurs et de leurs machines agricoles, rendant de ce fait possible le travail de la terre autour et au-dessous desdites tables 3.

Il est évidemment possible d'envisager toutes sortes d'utilisations agricoles. En effet, à titre d'exemple, l'espace disponible autour des tables 3 et des panneaux photovoltaïques 30 peut être utilisé pour la culture de toute végétation, par exemple celle des arbres fruitiers, des légumes ou autres fleurs, ou encore l'élevage d'animaux.

L'invention concerne un procédé mis en œuvre par ordinateur, adapté pour améliorer la conception et l'utilisation d'une centrale photovoltaïque, telle que la centrale photovoltaïque 1 selon la figure 1, en simulant l'utilisation d'une centrale photovoltaïque 1 sur le site réel où ladite centrale photovoltaïque 1 doit être utilisée.

Cette simulation permet une analyse détaillée des conséquences de l'utilisation future de la centrale photovoltaïque 1 sur le site, comme par exemple, la quantité de lumière solaire reçue sur le sol 2 pendant la journée, au-dessous de la centrale photovoltaïque 1.

Selon l'invention, un dispositif informatique équipé d'une caméra est utilisé pour obtenir une première image de la position exacte où un utilisateur prévoit de construire une centrale photovoltaïque 1. Ladite première image est une image en temps réel. Ce dispositif informatique est, par exemple, une tablette ou un téléphone intelligent. Ce dispositif informatique est équipé d'un programme informatique, généralement sous la forme d'une application, adapté pour fournir une représentation visuelle de la centrale photovoltaïque à construire.

Au moyen du dispositif informatique, cette première image de l'endroit où la centrale photovoltaïque doit être installée est combinée avec la représentation visuelle en trois dimension (3D) de ladite centrale photovoltaïque, la combinaison des deux images étant représentée sur un écran.

Dans l'art antérieur, la combinaison d'une première image, représentant un lieu réel, et d'une seconde image disponible uniquement sous forme d'image informatique, est connue sous le nom de réalité augmentée.

Les avantages de la réalité augmentée telle qu'elle est utilisée selon la présente invention sont liés au fait que les propriétés exactes de l'endroit où une centrale photovoltaïque va être construite influencent directement les détails de la conception de ladite centrale photovoltaïque. Ces détails comprennent, par exemple, l'implantation, la forme, l'orientation et la configuration de la structure de la centrale photovoltaïque.

En pratique, la méthode et le système selon l'invention peuvent être utilisés de la manière décrite ci-dessous.

Un utilisateur souhaite construire une centrale photovoltaïque à un endroit déterminé. Cet utilisateur prépare un appareil électronique adapté, tel qu'une tablette ou un téléphone intelligent, doté d'un écran et d'une caméra.

L'utilisateur installe sur cet appareil électronique un outil logiciel, comme une application. Cet outil logiciel ou cette application comprend un modèle électronique de la centrale photovoltaïque à construire. L'outil logiciel ou l'application est adapté(e) pour afficher une représentation de la centrale photovoltaïque 1 sur l'écran du dispositif électronique.

Équipé du dispositif électronique, l'utilisateur se rend à l'endroit déterminé où la centrale photovoltaïque doit être construite. Sur place, l'utilisateur utilise la caméra pour produire un flux vidéo en temps réel représentant l'endroit où la centrale photovoltaïque 1 doit être construite. Le flux vidéo sera représenté sur l'écran de l'appareil électronique. Il est entendu que l'image vidéo représentée sur l'écran change en fonction des mouvements de l'appareil électronique. L'utilisateur peut se concentrer sur le sol, sur l'horizon ou produire un flux vidéo dans toute autre direction qu'il aura choisie.

Pendant que l'image de l'environnement est représentée sur l'écran du dispositif électronique, l'outil logiciel ou l'application produit et affiche une représentation en 3D de la centrale photovoltaïque 1 sur l'écran. Il est entendu que la partie du panneau photovoltaïque 1 affichée à l'écran dépend de la position et de l'orientation de l'appareil électronique, en particulier de l'orientation de la caméra de l'appareil électronique.

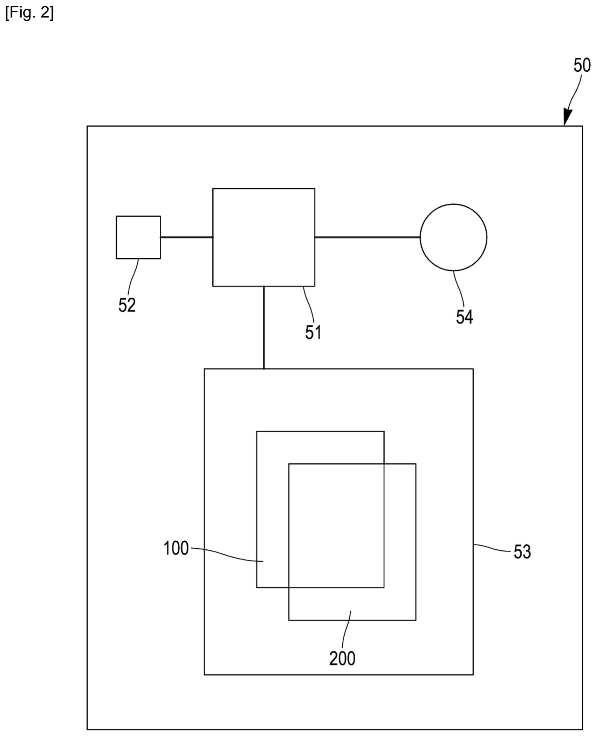

La figure 2 montre une vue schématique d'un système 50 pouvant être utilisé pour la présente invention. Le système 50 comprend un ordinateur 51 adapté à l'exécution de programmes informatiques, tels que des applications. Ledit ordinateur 51 est doté d'une entrée 52 permettant de télécharger des données vers l'ordinateur 51. L'ordinateur 51 est également relié à un écran 53. L'ordinateur 51 et l'écran 53 sont adaptés pour représenter les images obtenues au moyen de l'ordinateur 51 sur l'écran 53.

Le système 50 comprend par ailleurs un appareil photo tel qu'une caméra 54. Ladite caméra 54 est connectée à l'ordinateur 51 afin de permettre le traitement de l'image au moyen de l'ordinateur 54. La caméra 54 est également connectée à l'écran 53, par l'intermédiaire de l'ordinateur 51, pour permettre la représentation sur l'écran 53 des images obtenues au moyen de la caméra 54.

Le dispositif 50 selon la figure 2 est typiquement une tablette, telle qu'un Apple I-PAD^{®} ou un appareil similaire. L'appareil 50 peut également être un téléphone intelligent, tel qu'un Apple I-Phone^{©} ou un appareil « Androïd ». Cela signifie que l'écran 53 est typiquement un écran tactile permettant la réception d'instructions par des mouvements spécifiques des doigts d'un utilisateur sur l'écran 53.

Il est noté qu'au lieu d'une tablette ou d'un smart phone un casque de réalité virtuelle (RV) peut être utilisé, ledit casque RV étant équipé d'une caméra.

Comme indiqué de façon schématique sur la figure 2, le dispositif 50 est adapté pour représenter simultanément sur le même écran 53, une première image 100 fournie par la caméra 54, ou par l'ensemble composé de la caméra 54 et de l'ordinateur 51, ladite première image 100 projetant l'emplacement de construction de la centrale photovoltaïque 1. Typiquement, le premier signal permettant l'affichage de la première image 100 est un signal vidéo qui est présenté sur l'écran 53. Le signal exact qui est représenté dépend, bien sûr, de la position et de l'inclinaison de la caméra 54. Cela signifie qu'en tournant le dispositif 50, l'utilisateur peut examiner l'environnement dans n'importe quelle direction.

De plus, le dispositif 50 est adapté pour représenter une deuxième image 200, fournie par l'ordinateur 51, représentant la conception d'une centrale photovoltaïque 1 à construire sur l'emplacement représenté dans la première image 100.

Les mesures décrites ci-dessus ont pour effet que l'utilisateur voit à l'écran une combinaison d'une première image, sous la forme d'un flux vidéo de l'environnement où l'utilisateur se trouve et où le panneau photovoltaïque doit être construit. En plus de cette première image, l'utilisateur voit également une représentation de la centrale photovoltaïque 1.

Cela signifie que l'utilisateur peut se faire une idée très précise de l'aspect de l'environnement une fois que la centrale photovoltaïque 1 aura été érigée.

En d'autres termes, la méthode et le système selon l'invention permettent un examen détaillé de la conception de la centrale photovoltaïque 1 et de l'adaptabilité de cette conception à l'emplacement spécifique où la centrale photovoltaïque 1 est censée être construite.

La solution selon l'invention permettra à l'utilisateur de prévoir des modifications de la conception au cas où ces modifications s'avéreraient nécessaires.

La solution selon l'invention permettra de modifier la conception des centrales solaires pour des raisons purement techniques. L'utilisateur peut, par exemple, constater que les zones prévues pour la fixation des poteaux 5 ne sont pas adaptées à cet effet en raison de la présence d'obstacles, tels que des rochers. Un tel obstacle peut aussi comprendre un élément positionné sur le sol, tel qu'une clôture ou un portail. Des éléments techniques, tel qu'un drain, un conduit ou un puits peuvent également former des obstacles qui ne sont pas prévus sur les plans originaux. De plus, les obstacles peuvent comprendre des chemins existants ou de la végétation.

Il est également possible que l'utilisateur se rende compte de la présence d'obstacles qui peuvent bloquer le soleil à l'emplacement déterminé, tels que des bâtiments et des arbres. La présence de ces obstacles peut nécessiter des modifications dans la conception de la centrale photovoltaïque 1 afin de garantir l'efficacité de la production d'électricité. En présence d'une coactivité avec une utilisation du terrain pour des raisons agricoles, il faut pouvoir garantir l'efficacité de la production d'électricité et en même temps un ensoleillement adapté pour l'activité agricole.

Outre les raisons purement techniques, la solution selon l'invention peut également être utilisée pour améliorer les aspects esthétiques de la centrale photovoltaïque.

Grâce à la solution selon l'invention, un utilisateur peut avoir une impression très précise de l'impact visuel de la centrale photovoltaïque 1 à l'emplacement déterminé, une fois que la centrale photovoltaïque 1 prévue est érigée. Pour des raisons esthétiques, il peut être nécessaire d'apporter des modifications afin de réduire tout impact visuel indésirable pour la centrale photovoltaïque 1 à l'emplacement déterminé.

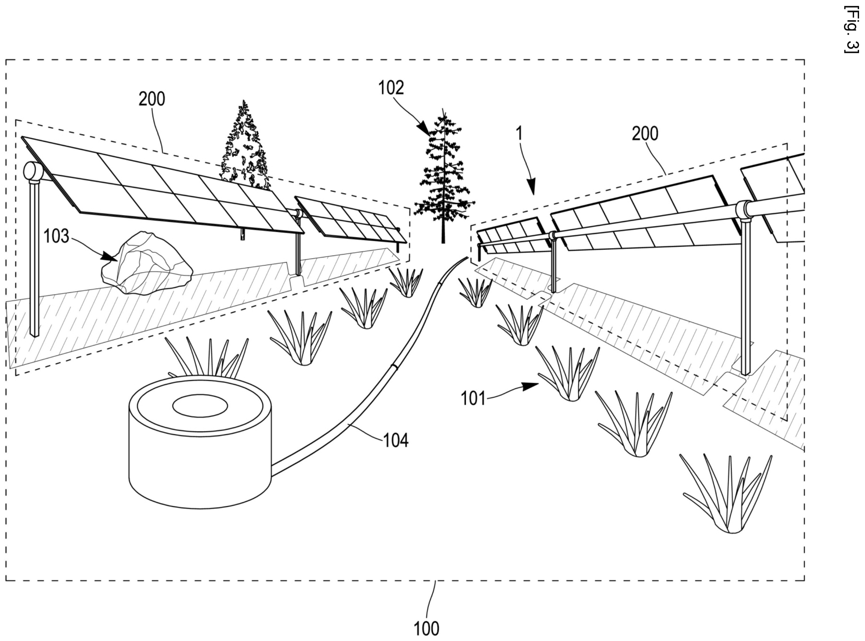

La figure 3 illustre de façon schématique une image pouvant être obtenue au moyen de la présente invention. L'image selon la figure 3 est typiquement l'image visible sur l'écran 53 tel que cela est illustré sur la figure 2. Sur la figure 3, le numéro de référence 100 fait référence à une première image de l'endroit où la centrale photovoltaïque 1 doit être installée, ladite première image 100 étant obtenue au moyen d'une caméra 54. Ladite première image 100 fournit une représentation réelle et actualisée de l'emplacement exact où la centrale photovoltaïque 1 doit être installée. Cette image montre l'élévation exacte du sol 2. D'autres potentiels objets, tels que des bâtiments, des arbres et des plantes, sont également représentés.

Sur la figure 3, les numéros de référence 200 font référence à une deuxième image, fournie par l'ordinateur 51 lui-même, représentant les différents éléments virtuels de construction de la centrale photovoltaïque 1 selon un style 3D texturé fourni en entrée à l'ordinateur 51. Ladite deuxième image 200 est, par exemple, obtenue en utilisant d'abord une application dédiée à la conception d'une centrale photovoltaïque 1.

La figure 3 montre sur la première image 100, par exemple la présence des arbustes 101, des arbres 102, un rocher 103 et la présence d'un élément technique tel qu'un tuyau 104.

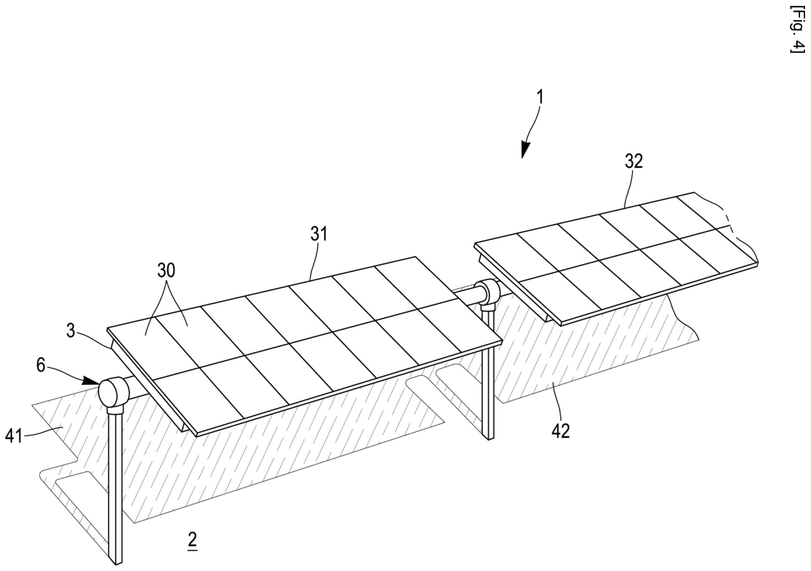

Les avantages liés à une représentation simultanée d'une première image 100 de l'environnement où une centrale photovoltaïque 1 doit être installée et une deuxième image 200 de ladite centrale photovoltaïque 1 apparaissent clairement à l'examen de la figure 4.

La figure 4 montre une représentation schématique combinée de la première et de la deuxième image 100, 200 de l'emplacement d'une future centrale photovoltaïque 1 et de la centrale photovoltaïque 1 elle-même. Sur la figure 4, la centrale photovoltaïque est représentée pourvue de ses tables 3 et des panneaux photovoltaïques 30, selon une première orientation par rapport au sol 2.

La figure 4 montre que l'image combinée ne présente pas seulement les détails à la centrale photovoltaïque 1, mais également les conséquences de la présence de la centrale photovoltaïque 1 et de l'inclinaison des différents éléments amovibles de ladite centrale photovoltaïque 1 sur l'exposition du sol 2 sous la centrale photovoltaïque 1 à la lumière du soleil. Lesdits éléments amovibles comprennent des panneaux photovoltaïques avec leur système de tracking 6 pour suivre le mouvement du soleil.

Le numéro de référence 41 indique une première zone ombrée correspondant à un premier ensemble ou assemblage 31 composé d'une table 3 et de panneaux photovoltaïques 30. Chaque autre assemblage 32, 33, etc. sera lié à d'autres zones ombrées 42, 43. Cela signifie que l'image représentée sur la figure 4 indique à l'utilisateur les zones du sol 2 qui seront ombragées lorsque la centrale photovoltaïque 1 sera installée et utilisée.

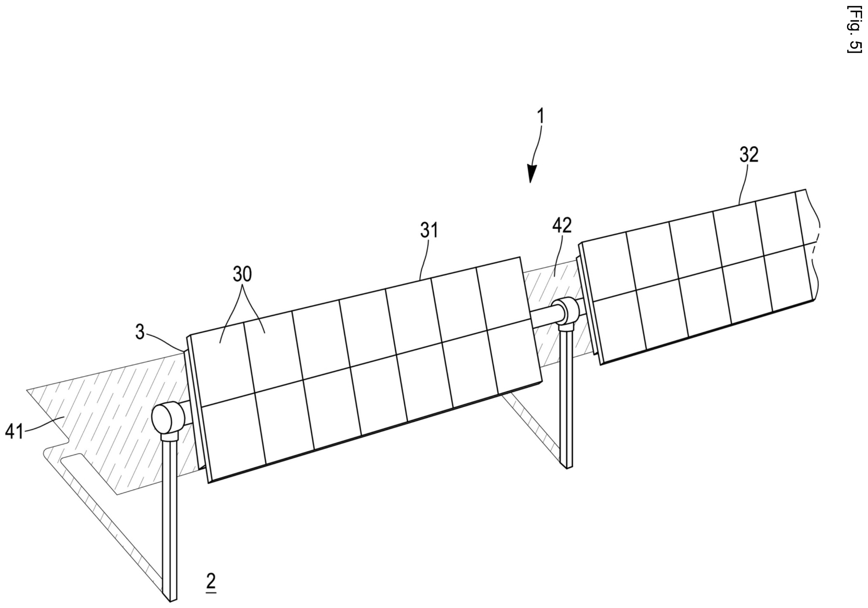

À partir de la position illustrée sur la figure 4, l'orientation des assemblages 31, 32 peut être modifiée, comme cela est représenté sur la figure 5.

La figure 5 montre que la position et la taille des zones ombrées 41, 42 situées sous la centrale photovoltaïque 1 changent également lorsque l'orientation des assemblages 31, 32 est modifiée.

Grâce aux images combinées, tel que cela est montré sur les figures 4 et 5, un utilisateur pourra vérifier si le sol 2 sous la centrale photovoltaïque 1 a été exposé au soleil comme prévu, ou s'il est nécessaire d'apporter des modifications à la conception initiale de ladite centrale photovoltaïque 1.

On comprendra que, pour permettre à un utilisateur d'apprécier pleinement les avantages de la présente invention, le dispositif 50 tel que décrit ci-dessus sera adapté afin d'exécuter un programme informatique grâce auquel il pourra modifier au moins :
- la première image 100 de l'emplacement,
- la deuxième image 200 de la centrale photovoltaïque, et
- les images combinées, comme le montrent les figures 4 et 5.

En règle générale, ledit programme informatique se présente sous la forme d'une application dotée d'une interface utilisateur adaptée.

L'application est généralement dotée de curseurs actionnés à l'aide d'un écran tactile.

Ladite application comprendra, par exemple, les fonctions ci-dessous grâce auxquelles il sera possible :
- de représenter la centrale photovoltaïque 1 dans la deuxième image 200 comme un objet en 3D,
- à l'utilisateur d'orienter la centrale photovoltaïque 1 dans la deuxième image 200 selon une orientation définie, par exemple nord-sud,
- d'utiliser un curseur pour modifier l'image combinée (focus, defocus) et pour modifier l'inclinaison des différents éléments amovibles de ladite centrale photovoltaïque,
- créer une base de données avec des représentations des différents types de centrales photovoltaïques et/ou différentes tailles desdites centrales et d'ajouter des représentations de ladite base de données à l'image représentée sur l'écran,
- d'ajouter à l'image sur l'écran une représentation de la lumière solaire et d'utiliser un curseur pour modifier l'heure de la journée, de placer automatiquement ou manuellement des produits alignés selon la direction Nord-Sud.

En utilisant le programme informatique mentionné, un utilisateur peut modifier l'inclinaison des assemblages 31, 32 comme indiqué ci-dessus. L'utilisateur peut modifier cette orientation pour apprécier en détail l'influence de cette inclinaison en ce qui concerne la création de zones ombragées sous la centrale photovoltaïque 1.

Ces modifications peuvent, par exemple, être effectuées manuellement. L'utilisateur peut également modifier l'orientation des assemblages afin de représenter l'orientation des assemblages 31, 32 à un moment déterminé.

A titre d'exemple, un utilisateur peut utiliser l'application mentionnée pour représenter dans l'image combinée les zones ombragées à une période déterminée de l'année, pendant la journée. L'ordinateur fournira les informations supplémentaires relatives, par exemple, à l'orientation du soleil tout au long de la journée et ce afin de créer une représentation correcte des zones ombragées pendant la journée.

Grâce à la présente invention, l'utilisateur peut visualiser les conséquences des décisions spécifiques qui ont été prises concernant les détails de la centrale photovoltaïque 1, comme la taille et l'orientation mutuelle des éléments de construction de ladite centrale photovoltaïque 1.

Par exemple, si l'utilisateur n'est pas satisfait de l'exposition du sol 2 à l'impact direct de la lumière du soleil sur le sol 2, il peut modifier sa conception initiale et examiner directement l'influence de ces changements sur l'exposition du sol 2 à la lumière du soleil.

Il est à noter que, selon la présente invention, un utilisateur peut examiner en détail, à l'aide d'une image réelle de l'endroit où la centrale photovoltaïque 1 est destinée à être installée, si la conception initiale de ladite centrale photovoltaïque 1 est conforme aux attentes lorsque l'utilisateur est présent à cet endroit. Cela signifie que l'utilisateur peut apporter des modifications à la conception de la centrale photovoltaïque 1 et recevoir directement un retour d'information sur les conséquences desdites modifications, par exemple en ce qui concerne l'exposition du sol 2 à la lumière directe du soleil.

Afin de faciliter l'utilisation du procédé selon la présente invention, il est possible d'enrichir l'image combinée illustrée aux figures 4 et 5 à l'aide de couleurs, lesdites différentes couleurs représentant, par exemple, différentes intensités d'exposition au soleil.

L'utilisation de couleurs peut faciliter l'interprétation, par l'utilisateur, des images représentées sur l'écran 53.

Il convient de noter qu'une centrale photovoltaïque 1 peut être équipée de moyens d'irrigation. En règle générale, lesdits moyens d'irrigation sont intégrés lors de la construction de la centrale photovoltaïque 1. Cela signifie que si un utilisateur utilise le sol 2 sous la centrale photovoltaïque 1 à des fins agricoles, lesdits moyens d'irrigation peuvent être utilisés afin d'améliorer les conditions de croissance de la végétation présente à proximité de ladite centrale photovoltaïque 1.

Selon un mode de réalisation de la présente invention, l'image illustrée sur les figures 4 et 5 peut être enrichie en indiquant également la quantité d'eau reçue par différentes parties du sol à proximité de la centrale photovoltaïque 1, en fonction de la conception de ladite centrale photovoltaïque 1. L'utilisateur peut utiliser les images enrichies pour revoir le profil de réception de l'eau et, si nécessaire, apporter des modifications aux moyens d'irrigations initialement prévus.

Selon un autre mode de réalisation de la présente invention, les images combinées des figures 4 et 5 peuvent être complétées par des représentations, par exemple, de machines agricoles qui seront utilisées à proximité de la centrale photovoltaïque 1.

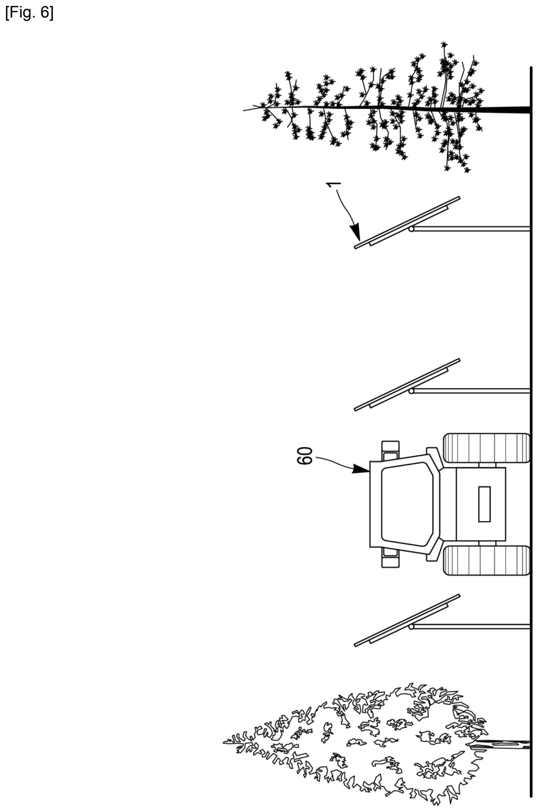

Cet exemple est illustré sur la figure 6. Cet ajout d'images de machines agricoles 60 permet une analyse plus détaillée selon laquelle il est possible de confirmer si l'emplacement initialement prévu pour la construction de la centrale photovoltaïque 1 est adapté ou s'il convient d'en changer.

Par exemple, en raison d'obstacles spécifiques présents à l'endroit initialement prévu pour l'installation de la centrale photovoltaïque 1, un utilisateur pourrait envisager des modifications à la conception de ladite centrale photovoltaïque 1 afin de permettre un déplacement sans entrave des machines agricoles 60 sous et le long des différents éléments de construction de ladite centrale photovoltaïque 1.

Ainsi, au sein de la présente invention, dans un premier temps, l'image d'une centrale photovoltaïque est créée sur l'ordinateur. Lors de la création de cette première conception de la centrale photovoltaïque, les dimensions de la zone déterminée à laquelle la centrale photovoltaïque est destinée ainsi que les caractéristiques d'ensoleillement de ladite zone déterminée sont prises en compte.

Dans un deuxième temps, l'image de la zone déterminée est obtenue.

Dans un troisième temps, une image combinée montrant la représentation de la première conception de la centrale photovoltaïque sur la zone déterminée est obtenue.

L'image combinée permet à l'utilisateur de constater l'adéquation entre la première conception de la centrale photovoltaïque et la zone déterminée.

En présence d'obstacles sur la zone déterminée, l'utilisateur peut produire une deuxième conception de la centrale photovoltaïque qui prendra en compte les obstacles et sera alors une version modifiée de la première conception de la centrale photovoltaïque.

Par exemple, si l'emplacement d'un poteau de la centrale photovoltaïque est occupé par un rocher dans la zone déterminée, alors ce poteau doit être déplacé. Le déplacement de ce poteau peut occasionner une altération de la stabilité de la structure de la centrale photovoltaïque. Le concepteur de la centrale photovoltaïque doit tenir compte de cette altération pour produire une deuxième conception de ladite centrale photovoltaïque qui garantit la stabilité de la structure de la centrale photovoltaïque.

## Revendications

1. Procédé mis en œuvre par ordinateur permettant d'optimiser la conception d'une centrale photovoltaïque comprenant une structure positionnée sur un support, une pluralité d'unités de production d'électricité connectées à ladite structure, le procédé comprenant les étapes suivantes :
- obtenir dans un ordinateur un modèle mathématique d'une première conception de la centrale photovoltaïque comprenant les positions des différentes unités de production d'électricité par rapport au support dans une première orientation, les distances mutuelles entre lesdites unités de production et la position du soleil par rapport à ladite centrale photovoltaïque,
- générer, au moyen de l'ordinateur, une première image représentant la première conception de la centrale photovoltaïque,
- obtenir, au moyen d'une caméra connectée à l'ordinateur, une deuxième image représentant la zone prévue pour la construction de la centrale photovoltaïque selon la première conception,
- représenter la première image et la deuxième image sur un écran relié à l'ordinateur afin d'obtenir une image combinée montrant la centrale photovoltaïque selon la première conception sur ladite zone prévue, et
- analyser l'adéquation de la première conception de la centrale photovoltaïque à la zone prévue.

2. Procédé selon la revendication 1, dans lequel ledit procédé comprend les étapes suivantes :
- identifier, sur la base de l'analyse de l'adéquation de la première conception de la centrale photovoltaïque à la zone prévue, des modifications permettant d'améliorer l'adéquation de la centrale photovoltaïque à la zone prévue,
- mettre à jour la première conception de la centrale photovoltaïque à l'aide desdites modifications identifiées afin d'obtenir une deuxième conception de la centrale photovoltaïque,
- générer, au moyen de l'ordinateur, une première image actualisée représentant la deuxième conception de la centrale photovoltaïque, et
- projeter la première image actualisée et la deuxième image sur l'écran relié à l'ordinateur afin d'obtenir une image combinée actualisée montrant la centrale photovoltaïque selon la deuxième conception sur la zone prévue.

3. Procédé selon la revendication 1 ou 2, comprenant les étapes suivantes :
- obtenir dans l'ordinateur un modèle mathématique de la centrale photovoltaïque comprenant les positions des différentes unités de production d'électricité par rapport au support dans une deuxième orientation,
- générer au moyen du calculateur une première image actualisée représentant la centrale photovoltaïque avec les différentes unités de production d'électricité dans une seconde orientation, et
- représenter la première image actualisée et la deuxième image sur l'écran relié à l'ordinateur afin d'obtenir une image combinée actualisée représentant la centrale photovoltaïque avec les différentes unités de production d'électricité dans la deuxième orientation sur ladite zone prévue.

4. Procédé selon l'une des revendications 1, 2 ou 3, dans lequel le première image est une image en 3D et dans lequel la deuxième image est une image vidéo.

5. Procédé selon la revendication 4, dans lequel la deuxième image est une image en temps réel.

6. Procédé selon l'une des revendications 1 - 5, comprenant les étapes suivantes
- calculer, pour un moment déterminé, au moyen du modèle mathématique et de la position du soleil audit moment déterminé, la taille et la position des ombres sur le sol, en tenant compte de l'orientation instantanée de chacune des unités de production d'électricité, et
- représenter les ombres calculées dans l'image combinée afin d'obtenir une image combinée montrant la centrale photovoltaïque sur la zone prévue et la présence d'ombres sur la zone prévue audit moment déterminé.

7. Procédé selon la revendication 6, dans lequel, dans l'image combinée, à l'aide de couleurs, différentes zones sont représentées, les différentes couleurs représentant différentes intensités d'exposition au soleil.

8. Procédé selon l'une des revendications précédentes, dans lequel chacune des unités de production d'électricité est conçue pour modifier son orientation par rapport au soleil afin d'optimiser sa production d'électricité, lesdites unités de production d'électricité étant connectées à des moyens de commande permettant de contrôler ladite orientation, dans lequel le procédé comprend les étapes suivantes :
- calculer, pour un moment déterminé, au moyen du modèle mathématique et de la position du soleil audit moment déterminé, la production d'électricité de la centrale photovoltaïque pour une pluralité d'orientations pour chacune de ladite pluralité d'unités de production d'électricité, en tenant compte de l'orientation instantanée de chacune des unités de production d'électricité et de leur production d'électricité instantanée correspondante,
- sélectionner, parmi cette pluralité d'orientations, une orientation déterminée pour chacune des unités de production d'électricité qui correspond à un ensemble de positions optimales pour la production d'électricité au moyen de la centrale photovoltaïque à l'instant déterminé,
- générer au moyen de l'ordinateur une première image actualisée représentant la centrale photovoltaïque avec les différentes unités de production d'électricité dans leur position optimale respective, et
- représenter la première image actualisée et la deuxième image sur l'écran relié à l'ordinateur afin d'obtenir une image combinée actualisée montrant la centrale photovoltaïque avec les différentes unités de production d'électricité dans leur position optimale sur ladite zone prévue au moment déterminé.

9. Procédé selon l'une quelconque des revendications précédentes, dans lequel le modèle mathématique comprend des paramètres définissant des éléments structurels de la centrale photovoltaïque et/ou des paramètres définissant des objets à proximité de la centrale photovoltaïque, le procédé comprenant l'étape suivante :
- identifier à l'aide du modèle mathématique, la présence d'au moins une ombre créée par un élément structurel de la centrale photovoltaïque et/ou un objet à proximité de la centrale photovoltaïque sur une unité de production d'électricité à l'instant déterminé, afin d'identifier une unité de production d'électricité ombragée.

10. Procédé selon l'une quelconque des revendications précédentes, dans lequel le modèle mathématique comprend des paramètres définissant l'irrigation avec des moyens d'irrigation autour de la centrale photovoltaïque dans lequel dans l'image combinée, à l'aide de couleurs, différentes zones sont représentées, les différentes couleurs représentant différentes intensités d'irrigation autour de la centrale photovoltaïque.

11. Procédé selon l'une quelconque des revendications précédentes, dans lequel le modèle mathématique comprend des paramètres définissant des représentations des machines agricoles, dans lequel dans l'image combinée, à l'aide desdits paramètres la présence des machines agricoles est représentée.

12. Produit programme d'ordinateur comprenant des instructions qui, lorsque le programme est exécuté par un ordinateur, conduisent celui-ci à mettre en œuvre le procédé selon l'une des revendications 1 à 11.

13. Support d'enregistrement lisible par ordinateur comprenant des instructions qui, lorsqu'elles sont exécutées par un ordinateur, conduisent celui-ci à mettre en œuvre le procédé selon l'une des revendications 1 à 11.
